# EUROPEAN PATENT APPLICATION

(11) **EP 4 224 962 A1**
(43) Date of publication of application: **09.08.2023**
(21) Application number: 21886966.7
(22) Date of filing: 01.11.2021
(51) Int. Cl.: H04W 72/04, H04W 72/02, H04W 92/18

(54) **COMMUNICATION METHOD BASED ON INTER-UE COORDINATION INFORMATION IN SIDELINK**

(30) Priority: 02.11.2020 US 202063108636 P
(71) Applicant: HYUNDAI MOTOR COMPANY, Seoul 06797 (KR); Kia Corporation, Seocho-gu Seoul 06797 (KR)
(72) Inventor: HONG, Ui Hyun, Hwaseong-si, Gyeonggi-do 18280 (KR)
(74) Representative: Isarpatent
(86) International application number: PCT/KR2021/015588
(87) International publication number: WO 2022/092972

(57) **Abstract**

Disclosed is a communication method based on inter-UE coordination information in a sidelink. An operation method of a first terminal comprises the steps of: transmitting, to a second terminal, a first indicator for requesting transmission of support information; receiving the support information from the second terminal; selecting a transmission resource in consideration of a resource indicated by the support information; and performing sidelink communication by using the transmission resource.

## Description

### [Technical Field]

The present disclosure relates to a sidelink communication technique, and more particularly, to a sidelink communication technique for using resources selected based on inter-user equipment (UE) coordination information.

### [Background Art]

A fifth-generation (5G) communication system (e.g., New Radio (NR) communication system) which uses a frequency band higher than a frequency band of a fourth-generation (4G) communication system (e.g., Long Term Evolution (LTE) communication system or LTE-Advanced (LTE-A) communication system) as well as the frequency band of the 4G communication system has been considered for processing of wireless data. The 5G communication system can support Enhanced Mobile Broadband (eMBB) communications, Ultra-Reliable and Low-Latency communications (URLLC), massive Machine Type Communications (mMTC), and the like.

The 4G communication system and 5G communication system can support Vehicle-to-Everything (V2X) communications. The V2X communications supported in a cellular communication system, such as the 4G communication system, the 5G communication system, and the like, may be referred to as "Cellular-V2X (C-V2X) communications." The V2X communications (e.g., C-V2X communications) may include Vehicle-to-Vehicle (V2V) communications, Vehicle-to-Infrastructure (V2I) communications, Vehicle-to-Pedestrian (V2P) communication, Vehicle-to-Network (V2N) communication, and the like.

In the cellular communication systems, the V2X communications (e.g., C-V2X communications) may be performed based on sidelink communication technologies (e.g., Proximity-based Services (ProSe) communication technology, Device-to-Device (D2D) communication technology, or the like). For example, sidelink channels for vehicles participating in V2V communications can be established, and communications between the vehicles can be performed using the sidelink channels. Sidelink communication may be performed using configured grant (CG) resources. The CG resources may be periodically configured, and periodic data (e.g., periodic sidelink data) may be transmitted using the CG resources.

Meanwhile, a transmitting terminal may select a resource by performing a resource selection operation, and may transmit sidelink data to a receiving terminal using the selected resource. However, when a hidden terminal and/or an exposed terminal exists in the communication system (e.g., when the resource selected by the transmitting terminal is used by the hidden terminal and/or the exposed terminal), the sidelink data may not be successfully received by the receiving terminal. Therefore, resource coordination methods for solving the above problems are required.

### [Disclosure]

### [Technical Problem]

The present disclosure is directed to providing a method and an apparatus for sidelink communication based on inter-UE coordination information.

### [Technical Solution]

An operation method of a first terminal, according to a first exemplary embodiment of the present disclosure for achieving the above-described objective, may comprise: transmitting a first indicator requesting transmission of assistance information to a second terminal; receiving the assistance information from the second terminal; selecting a transmission resource in consideration of resources indicated by the assistance information; and performing sidelink communication using the transmission resource.

The operation method may further comprise: transmitting a second indicator indicating a format of the assistance information to the second terminal, wherein the assistance information received from the second terminal has the format indicated by the second indicator.

The second indicator may indicate a format 1 or a format 2, a size of the format 1 may be smaller than a size of the format 2, and a type of the format of the assistance information may be determined based on a payload size of the assistance information.

When the second indicator indicates the format 1, the assistance information having the format 1 may be received through a physical sidelink feedback channel (PSFCH), and when the second indicator indicates the format 2, the assistance information having the format 2 may be received through a physical sidelink control channel (PSCCH) or a physical sidelink shared channel (PSSCH).

The second indicator may further indicate a channel through which the assistance information having the format is transmitted, and the channel may be a PSFCH, PSCCH, or PSSCH.

The first indicator may be transmitted through a PSCCH, and the second indicator may be transmitted through a PSCCH or PSSCH.

A channel through which the assistance information is transmitted may be determined according to a PSFCH periodicity, the assistance information may be transmitted through a PSCCH or PSSCH when the PSFCH periodicity is 0, and the assistance information may be transmitted through a PSFCH when the PSFCH periodicity is not 0.

A channel through which the assistance information is transmitted may be determined based on a resource size of a PSSCH, the assistance information may not be transmitted through a PSSCH when the resource size is less than or equal to a threshold value, and the assistance information may be transmitted through a PSSCH when the resource size exceeds the threshold value.

The resources indicated by the assistance information may be preferred resources or non-preferred resources for the sidelink communication.

The transmitting of the first indicator may be performed when use of the assistance information is enabled by a base station.

An operation method of a second terminal, according to a second exemplary embodiment of the present disclosure for achieving the above-described objective, may comprise: receiving a first indicator requesting transmission of assistance information from a first terminal; generating the assistance information indicating at least one of preferred resources and non-preferred resources according to the requesting of the first terminal; and transmitting the assistance information to the first terminal, wherein a transmission resource for sidelink communication is selected by the first terminal in consideration of the assistance information.

The operation method may further comprise: receiving a second indicator indicating a format of the assistance information from the first terminal, wherein the assistance information generated by the second terminal has the format indicated by the second indicator.

The second indicator may indicate a format 1 or a format 2, a size of the format 1 may be smaller than a size of the format 2, and a type of the format of the assistance information may be determined based on a payload size of the assistance information.

When the second indicator indicates the format 1, the assistance information having the format 1 may be received through a physical sidelink feedback channel (PSFCH), and when the second indicator indicates the format 2, the assistance information having the format 2 may be received through a physical sidelink control channel (PSCCH) or a physical sidelink shared channel (PSSCH).

The second indicator may further indicate a channel through which the assistance information having the format is transmitted, and the channel may be a PSFCH, PSCCH, or PSSCH.

The first indicator may be received through a PSCCH, and the second indicator may be received through a PSCCH or PSSCH.

A channel through which the assistance information is transmitted may be determined according to a PSFCH periodicity, the assistance information may be transmitted through a PSCCH or PSSCH when the PSFCH periodicity is 0, and the assistance information may be transmitted through a PSFCH when the PSFCH periodicity is not 0.

A channel through which the assistance information is transmitted may be determined based on a resource size of a PSSCH, the assistance information may not be transmitted through a PSSCH when the resource size is less than or equal to a threshold value, and the assistance information may be transmitted through a PSSCH when the resource size exceeds the threshold value.

The receiving of the first indicator may be performed when use of the assistance information is enabled by a base station.

The assistance information may be transmitted through a resource configured by a base station.

### [Advantageous Effects]

According to the present disclosure, a first terminal may transmit an indicator requesting transmission of assistance information (e.g., inter-UE coordination information) to a second terminal, and the second terminal may transmit the assistance information to the first terminal according to the request of the first terminal. The first terminal may select a transmission resource in consideration of the assistance information (e.g., preferred resources and/or non-preferred resources), and may perform sidelink communication using the selected transmission resource. Accordingly, the probability of resource collision in sidelink communication can be reduced, and sidelink data can be successfully transmitted and received.

### [Description of Drawings]

FIG. 1 is a conceptual diagram illustrating V2X communication scenarios.
FIG. 2 is a conceptual diagram illustrating an exemplary embodiment of a cellular communication system.
FIG. 3 is a conceptual diagram illustrating an exemplary embodiment of a communication node constituting a cellular communication system.
FIG. 4 is a block diagram illustrating an exemplary embodiment of a user plane protocol stack of a UE performing sidelink communication.
FIG. 5 is a block diagram illustrating a first exemplary embodiment of a control plane protocol stack of a UE performing sidelink communication.
FIG. 6 is a block diagram illustrating a second exemplary embodiment of a control plane protocol stack of a UE performing sidelink communication.
FIG. 7 is a sequence chart illustrating a first exemplary embodiment of a sidelink communication method considering assistance information.

### [Mode for the Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In exemplary embodiments of the present disclosure, (re)transmission may mean 'transmission', 'retransmission', or 'transmission and retransmission', (re)configuration may mean 'configuration', 'reconfiguration', or 'configuration and reconfiguration', (re)connection may mean 'connection', 'reconnection', or 'connection and reconnection', and (re)access may mean 'access', 're-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as `comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms of the present disclosure will be described in detail with reference to the accompanying drawings. In describing the disclosure, to facilitate the entire understanding of the disclosure, like numbers refer to like elements throughout the description of the figures and the repetitive description thereof will be omitted.

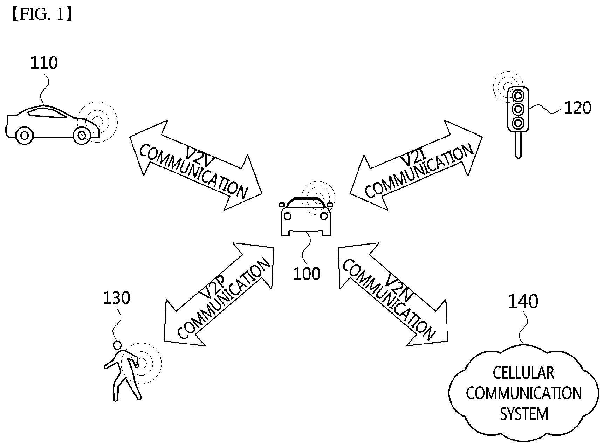

FIG. 1 is a conceptual diagram illustrating V2X communication scenarios.

As shown in FIG. 1, the V2X communications may include Vehicle-to-Vehicle (V2V) communications, Vehicle-to-Infrastructure (V2I) communications, Vehicle-to-Pedestrian (V2P) communications, Vehicle-to-Network (V2N) communications, and the like. The V2X communications may be supported by a cellular communication system (e.g., a cellular communication system 140), and the V2X communications supported by the cellular communication system 140 may be referred to as "Cellular-V2X (C-V2X) communications." Here, the cellular communication system 140 may include the 4G communication system (e.g., LTE communication system or LTE-A communication system), the 5G communication system (e.g., NR communication system), and the like.

The V2V communications may include communications between a first vehicle 100 (e.g., a communication node located in the vehicle 100) and a second vehicle 110 (e.g., a communication node located in the vehicle 110). Various driving information such as velocity, heading, time, position, and the like may be exchanged between the vehicles 100 and 110 through the V2V communications. For example, autonomous driving (e.g., platooning) may be supported based on the driving information exchanged through the V2V communications. The V2V communications supported in the cellular communication system 140 may be performed based on "sidelink" communication technologies (e.g., ProSe and D2D communication technologies, and the like). In this case, the communications between the vehicles 100 and 110 may be performed using at least one sidelink channel established between the vehicles 100 and 110.

The V2I communications may include communications between the first vehicle 100 (e.g., the communication node located in the vehicle 100) and an infrastructure (e.g., road side unit (RSU)) 120 located on a roadside. The infrastructure 120 may also include a traffic light or a street light which is located on the roadside. For example, when the V2I communications are performed, the communications may be performed between the communication node located in the first vehicle 100 and a communication node located in a traffic light. Traffic information, driving information, and the like may be exchanged between the first vehicle 100 and the infrastructure 120 through the V2I communications. The V2I communications supported in the cellular communication system 140 may also be performed based on sidelink communication technologies (e.g., ProSe and D2D communication technologies, and the like). In this case, the communications between the vehicle 100 and the infrastructure 120 may be performed using at least one sidelink channel established between the vehicle 100 and the infrastructure 120.

The V2P communications may include communications between the first vehicle 100 (e.g., the communication node located in the vehicle 100) and a person 130 (e.g., a communication node carried by the person 130). The driving information of the first vehicle 100 and movement information of the person 130 such as velocity, heading, time, position, and the like may be exchanged between the vehicle 100 and the person 130 through the V2P communications. The communication node located in the vehicle 100 or the communication node carried by the person 130 may generate an alarm indicating a danger by judging a dangerous situation based on the obtained driving information and movement information. The V2P communications supported in the cellular communication system 140 may be performed based on sidelink communication technologies (e.g., ProSe and D2D communication technologies, and the like). In this case, the communications between the communication node located in the vehicle 100 and the communication node carried by the person 130 may be performed using at least one sidelink channel established between the communication nodes.

The V2N communications may be communications between the first vehicle 100 (e.g., the communication node located in the vehicle 100) and a server connected through the cellular communication system 140. The V2N communications may be performed based on the 4G communication technology (e.g., LTE or LTE-A) or the 5G communication technology (e.g., NR). Also, the V2N communications may be performed based on a Wireless Access in Vehicular Environments (WAVE) communication technology or a Wireless Local Area Network (WLAN) communication technology which is defined in Institute of Electrical and Electronics Engineers (IEEE) 802.11, or a Wireless Personal Area Network (WPAN) communication technology defined in IEEE 802.15.

Meanwhile, the cellular communication system 140 supporting the V2X communications may be configured as follows.

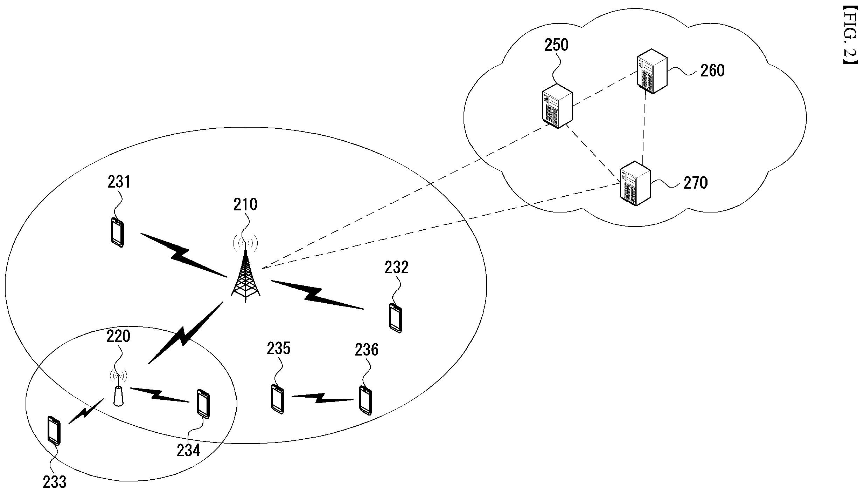

FIG. 2 is a conceptual diagram illustrating an exemplary embodiment of a cellular communication system.

As shown in FIG. 2, a cellular communication system may include an access network, a core network, and the like. The access network may include a base station 210, a relay 220, User Equipments (UEs) 231 through 236, and the like. The UEs 231 through 236 may include communication nodes located in the vehicles 100 and 110 of FIG. 1, the communication node located in the infrastructure 120 of FIG. 1, the communication node carried by the person 130 of FIG. 1, and the like. When the cellular communication system supports the 4G communication technology, the core network may include a serving gateway (S-GW) 250, a packet data network (PDN) gateway (P-GW) 260, a mobility management entity (MME) 270, and the like.

When the cellular communication system supports the 5G communication technology, the core network may include a user plane function (UPF) 250, a session management function (SMF) 260, an access and mobility management function (AMF) 270, and the like. Alternatively, when the cellular communication system operates in a Non-Stand Alone (NSA) mode, the core network constituted by the S-GW 250, the P-GW 260, and the MME 270 may support the 5G communication technology as well as the 4G communication technology, and the core network constituted by the UPF 250, the SMF 260, and the AMF 270 may support the 4G communication technology as well as the 5G communication technology.

In addition, when the cellular communication system supports a network slicing technique, the core network may be divided into a plurality of logical network slices. For example, a network slice supporting V2X communications (e.g., a V2V network slice, a V2I network slice, a V2P network slice, a V2N network slice, etc.) may be configured, and the V2X communications may be supported through the V2X network slice configured in the core network.

The communication nodes (e.g., base station, relay, UE, S-GW, P-GW, MME, UPF, SMF, AMF, etc.) comprising the cellular communication system may perform communications by using at least one communication technology among a code division multiple access (CDMA) technology, a time division multiple access (TDMA) technology, a frequency division multiple access (FDMA) technology, an orthogonal frequency division multiplexing (OFDM) technology, a filtered OFDM technology, an orthogonal frequency division multiple access (OFDMA) technology, a single carrier FDMA (SC-FDMA) technology, a non-orthogonal multiple access (NOMA) technology, a generalized frequency division multiplexing (GFDM) technology, a filter bank multi-carrier (FBMC) technology, a universal filtered multi-carrier (UFMC) technology, and a space division multiple access (SDMA) technology.

The communication nodes (e.g., base station, relay, UE, S-GW, P-GW, MME, UPF, SMF, AMF, etc.) comprising the cellular communication system may be configured as follows.

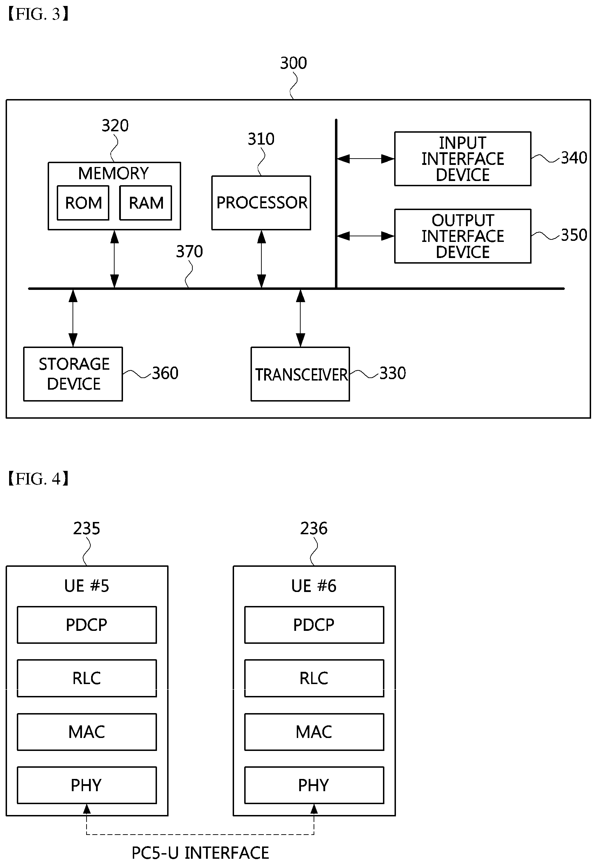

FIG. 3 is a conceptual diagram illustrating an exemplary embodiment of a communication node constituting a cellular communication system.

As shown in FIG. 3, a communication node 300 may comprise at least one processor 310, a memory 320, and a transceiver 330 connected to a network for performing communications. Also, the communication node 300 may further comprise an input interface device 340, an output interface device 350, a storage device 360, and the like. Each component included in the communication node 300 may communicate with each other as connected through a bus 370.

However, each of the components included in the communication node 300 may be connected to the processor 310 via a separate interface or a separate bus rather than the common bus 370. For example, the processor 310 may be connected to at least one of the memory 320, the transceiver 330, the input interface device 340, the output interface device 350, and the storage device 360 via a dedicated interface.

The processor 310 may execute at least one instruction stored in at least one of the memory 320 and the storage device 360. The processor 310 may refer to a central processing unit (CPU), a graphics processing unit (GPU), or a dedicated processor on which methods in accordance with embodiments of the present disclosure are performed. Each of the memory 320 and the storage device 360 may include at least one of a volatile storage medium and a nonvolatile storage medium. For example, the memory 320 may comprise at least one of read-only memory (ROM) and random access memory (RAM).

Referring again to FIG. 2, in the communication system, the base station 210 may form a macro cell or a small cell, and may be connected to the core network via an ideal backhaul or a non-ideal backhaul. The base station 210 may transmit signals received from the core network to the UEs 231 through 236 and the relay 220, and may transmit signals received from the UEs 231 through 236 and the relay 220 to the core network. The UEs 231, 232, 234, 235 and 236 may belong to cell coverage of the base station 210. The UEs 231, 232, 234, 235 and 236 may be connected to the base station 210 by performing a connection establishment procedure with the base station 210. The UEs 231, 232, 234, 235 and 236 may communicate with the base station 210 after being connected to the base station 210.

The relay 220 may be connected to the base station 210 and may relay communications between the base station 210 and the UEs 233 and 234. That is, the relay 220 may transmit signals received from the base station 210 to the UEs 233 and 234, and may transmit signals received from the UEs 233 and 234 to the base station 210. The UE 234 may belong to both of the cell coverage of the base station 210 and the cell coverage of the relay 220, and the UE 233 may belong to the cell coverage of the relay 220. That is, the UE 233 may be located outside the cell coverage of the base station 210. The UEs 233 and 234 may be connected to the relay 220 by performing a connection establishment procedure with the relay 220. The UEs 233 and 234 may communicate with the relay 220 after being connected to the relay 220.

The base station 210 and the relay 220 may support multiple-input, multiple-output (MIMO) technologies (e.g., single user (SU)-MIMO, multi-user (MU)-MIMO, massive MIMO, etc.), coordinated multipoint (CoMP) communication technologies, carrier aggregation (CA) communication technologies, unlicensed band communication technologies (e.g., Licensed Assisted Access (LAA), enhanced LAA (eLAA), etc.), sidelink communication technologies (e.g., ProSe communication technology, D2D communication technology), or the like. The UEs 231, 232, 235 and 236 may perform operations corresponding to the base station 210 and operations supported by the base station 210. The UEs 233 and 234 may perform operations corresponding to the relays 220 and operations supported by the relays 220.

Here, the base station 210 may be referred to as a Node B (NB), an evolved Node B (eNB), a base transceiver station (BTS), a radio remote head (RRH), a transmission reception point (TRP), a radio unit (RU), a roadside unit (RSU), a radio transceiver, an access point, an access node, or the like. The relay 220 may be referred to as a small base station, a relay node, or the like. Each of the UEs 231 through 236 may be referred to as a terminal, an access terminal, a mobile terminal, a station, a subscriber station, a mobile station, a portable subscriber station, a node, a device, an on-broad unit (OBU), or the like.

Meanwhile, the communications between the UEs 235 and 236 may be performed based on the sidelink communication technique. The sidelink communications may be performed based on a one-to-one scheme or a one-to-many scheme. When V2V communications are performed using the sidelink communication technique, the UE 235 may be the communication node located in the first vehicle 100 of FIG. 1 and the UE 236 may be the communication node located in the second vehicle 110 of FIG. 1. When V2I communications are performed using the sidelink communication technique, the UE 235 may be the communication node located in first vehicle 100 of FIG. 1 and the UE 236 may be the communication node located in the infrastructure 120 of FIG. 1. When V2P communications are performed using the sidelink communication technique, the UE 235 may be the communication node located in first vehicle 100 of FIG. 1 and the UE 236 may be the communication node carried by the person 130 of FIG. 1.

The scenarios to which the sidelink communications are applied may be classified as shown below in Table 1 according to the positions of the UEs (e.g., the UEs 235 and 236) participating in the sidelink communications. For example, the scenario for the sidelink communications between the UEs 235 and 236 shown in FIG. 2 may be a sidelink communication scenario C.

**[Table 1]**

| **Sidelink Communication Scenario** | **Position of UE 235** | **Position of UE 236** |
|---|---|---|
| A | Out of coverage of base station 210 | Out of coverage of base station 210 |
| B | In coverage of base station 210 | Out of coverage of base station 210 |
| C | In coverage of base station 210 | In coverage of base station 210 |
| D | In coverage of base station 210 | In coverage of other base station |

Meanwhile, a user plane protocol stack of the UEs (e.g., the UEs 235 and 236) performing sidelink communications may be configured as follows.

FIG. 4 is a block diagram illustrating an exemplary embodiment of a user plane protocol stack of a UE performing sidelink communication.

As shown in FIG. 4, a left UE may be the UE 235 shown in FIG. 2 and a right UE may be the UE 236 shown in FIG. 2. The scenario for the sidelink communications between the UEs 235 and 236 may be one of the sidelink communication scenarios A through D of Table 1. The user plane protocol stack of each of the UEs 235 and 236 may comprise a physical (PHY) layer, a medium access control (MAC) layer, a radio link control (RLC) layer, and a packet data convergence protocol (PDCP) layer.

The sidelink communications between the UEs 235 and 236 may be performed using a PC5 interface (e.g., PC5-U interface). A layer-2 identifier (ID) (e.g., a source layer-2 ID, a destination layer-2 ID) may be used for the sidelink communications, and the layer 2-ID may be an ID configured for the V2X communications (e.g., V2X service). Also, in the sidelink communications, a hybrid automatic repeat request (HARQ) feedback operation may be supported, and an RLC acknowledged mode (RLC AM) or an RLC unacknowledged mode (RLC UM) may be supported.

Meanwhile, a control plane protocol stack of the UEs (e.g., the UEs 235 and 236) performing sidelink communications may be configured as follows.

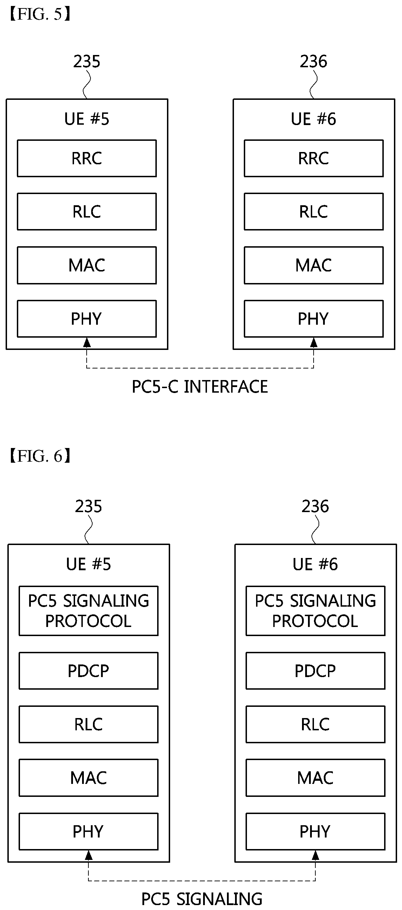

FIG. 5 is a block diagram illustrating a first exemplary embodiment of a control plane protocol stack of a UE performing sidelink communication, and FIG. 6 is a block diagram illustrating a second exemplary embodiment of a control plane protocol stack of a UE performing sidelink communication.

As shown in FIGS. 5 and 6, a left UE may be the UE 235 shown in FIG. 2 and a right UE may be the UE 236 shown in FIG. 2. The scenario for the sidelink communications between the UEs 235 and 236 may be one of the sidelink communication scenarios A through D of Table 1. The control plane protocol stack illustrated in FIG. 5 may be a control plane protocol stack for transmission and reception of broadcast information (e.g., Physical Sidelink Broadcast Channel (PSBCH)).

The control plane protocol stack shown in FIG. 5 may include a PHY layer, a MAC layer, an RLC layer, and a radio resource control (RRC) layer. The sidelink communications between the UEs 235 and 236 may be performed using a PC5 interface (e.g., PC5-C interface). The control plane protocol stack shown in FIG. 6 may be a control plane protocol stack for one-to-one sidelink communication. The control plane protocol stack shown in FIG. 6 may include a PHY layer, a MAC layer, an RLC layer, a PDCP layer, and a PC5 signaling protocol layer.

Meanwhile, channels used in the sidelink communications between the UEs 235 and 236 may include a Physical Sidelink Shared Channel (PSSCH), a Physical Sidelink Control Channel (PSCCH), a Physical Sidelink Discovery Channel (PSDCH), and a Physical Sidelink Broadcast Channel (PSBCH). The PSSCH may be used for transmitting and receiving sidelink data and may be configured in the UE (e.g., UE 235 or 236) by a higher layer signaling. The PSCCH may be used for transmitting and receiving sidelink control information (SCI) and may also be configured in the UE (e.g., UE 235 or 236) by a higher layer signaling.

The PSDCH may be used for a discovery procedure. For example, a discovery signal may be transmitted over the PSDCH. The PSBCH may be used for transmitting and receiving broadcast information (e.g., system information). Also, a demodulation reference signal (DM-RS), a synchronization signal, or the like may be used in the sidelink communications between the UEs 235 and 236. The synchronization signal may include a primary sidelink synchronization signal (PSSS) and a secondary sidelink synchronization signal (SSSS).

Meanwhile, a sidelink transmission mode (TM) may be classified into sidelink TMs 1 to 4 as shown below in Table 2.

**[Table 2]**

| **Sidelink TM** | **Description** |
|---|---|
| 1 | Transmission using resources scheduled by base station |
| 2 | UE autonomous transmission without scheduling of base station |
| 3 | Transmission using resources scheduled by base station in V2X communications |
| 4 | UE autonomous transmission without scheduling of base station in V2X communications |

When the sidelink TM 3 or 4 is supported, each of the UEs 235 and 236 may perform sidelink communications using a resource pool configured by the base station 210. The resource pool may be configured for each of the sidelink control information and the sidelink data.

The resource pool for the sidelink control information may be configured based on an RRC signaling procedure (e.g., a dedicated RRC signaling procedure, a broadcast RRC signaling procedure). The resource pool used for reception of the sidelink control information may be configured by a broadcast RRC signaling procedure. When the sidelink TM 3 is supported, the resource pool used for transmission of the sidelink control information may be configured by a dedicated RRC signaling procedure. In this case, the sidelink control information may be transmitted through resources scheduled by the base station 210 within the resource pool configured by the dedicated RRC signaling procedure. When the sidelink TM 4 is supported, the resource pool used for transmission of the sidelink control information may be configured by a dedicated RRC signaling procedure or a broadcast RRC signaling procedure. In this case, the sidelink control information may be transmitted through resources selected autonomously by the UE (e.g., UE 235 or 236) within the resource pool configured by the dedicated RRC signaling procedure or the broadcast RRC signaling procedure.

When the sidelink TM 3 is supported, the resource pool for transmitting and receiving sidelink data may not be configured. In this case, the sidelink data may be transmitted and received through resources scheduled by the base station 210. When the sidelink TM 4 is supported, the resource pool for transmitting and receiving sidelink data may be configured by a dedicated RRC signaling procedure or a broadcast RRC signaling procedure. In this case, the sidelink data may be transmitted and received through resources selected autonomously by the UE (e.g., UE 235 or 236) within the resource pool configured by the dedicated RRC signaling procedure or the broadcast RRC signaling procedure.

Hereinafter, sidelink communication methods will be described. Even when a method (e.g., transmission or reception of a signal) to be performed at a first communication node among communication nodes is described, a corresponding second communication node may perform a method (e.g., reception or transmission of the signal) corresponding to the method performed at the first communication node. That is, when an operation of a UE #1 (e.g., vehicle #1) is described, a UE #2 (e.g., vehicle #2) corresponding thereto may perform an operation corresponding to the operation of the UE #1. Conversely, when an operation of the UE #2 is described, the corresponding UE #1 may perform an operation corresponding to the operation of the UE #2. In exemplary embodiments described below, an operation of a vehicle may be an operation of a communication node located in the vehicle.

In exemplary embodiments, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a 'MAC message' or 'MAC signaling message'. A message used for PHY signaling may be referred to as a 'PHY message' or 'PHY signaling message'. The higher layer signaling may refer to an operation of transmitting and receiving system information (e.g., master information block (MIB), system information block (SIB)) and/or an RRC message. The MAC signaling may refer to an operation of transmitting and receiving a MAC control element (CE). The PHY signaling may refer to an operation of transmitting and receiving control information (e.g., downlink control information (DCI), uplink control information (UCI), or SCI).

A sidelink signal may be a synchronization signal and a reference signal used for sidelink communication. For example, the synchronization signal may be a synchronization signal/physical broadcast channel (SS/PBCH) block, sidelink synchronization signal (SLSS), primary sidelink synchronization signal (PSSS), secondary sidelink synchronization signal (SSSS), or the like. The reference signal may be a channel state information-reference signal (CSI-RS), DM-RS, phase tracking-reference signal (PT-RS), cell-specific reference signal (CRS), sounding reference signal (SRS), discovery reference signal (DRS), or the like.

A sidelink channel may be a PSSCH, PSCCH, PSDCH, PSBCH, physical sidelink feedback channel (PSFCH), or the like. In addition, a sidelink channel may refer to a sidelink channel including a sidelink signal mapped to specific resources in the corresponding sidelink channel. The sidelink communication may support a broadcast service, a multicast service, a groupcast service, and a unicast service.

The sidelink communication may be performed based on a single-SCI scheme or a multi-SCI scheme. When the single-SCI scheme is used, data transmission (e.g., sidelink data transmission, sidelink-shared channel (SL-SCH) transmission) may be performed based on one SCI (e.g., 1st-stage SCI). When the multi-SCI scheme is used, data transmission may be performed using two SCIs (e.g., 1st-stage SCI and 2nd-stage SCI). The SCI(s) may be transmitted on a PSCCH and/or a PSSCH. When the single-SCI scheme is used, the SCI (e.g., 1st-stage SCI) may be transmitted on a PSCCH. When the multi-SCI scheme is used, the 1st-stage SCI may be transmitted on a PSCCH, and the 2nd-stage SCI may be transmitted on the PSCCH or a PSSCH. The 1st-stage SCI may be referred to as 'first-stage SCI', and the 2nd-stage SCI may be referred to as 'second-stage SCI'. A format of the first-stage SCI may include a SCI format 1-A, and a format of the second-stage SCI may include a SCI format 2-A and a SCI format 2-B.

The first-stage SCI may include or more information elements among priority information, frequency resource assignment information, time resource assignment information, resource reservation period information, demodulation reference signal (DMRS) pattern information, second-stage SCI format information, a beta_offset indicator, the number of DMRS ports, and modulation and coding scheme (MCS) information. The second-stage SCI may include one or more information elements among a HARQ processor identifier (ID), a redundancy version (RV), a source ID, a destination ID, CSI request information, a zone ID, and communication range requirements.

Meanwhile, the transmitting terminal may perform sidelink communication with the receiving terminal. The transmitting terminal may refer to a terminal that transmits data (e.g., sidelink data) through a sidelink. That is, the transmitting terminal may mean a source terminal. The receiving terminal may mean a terminal that receives the data through the sidelink. That is, the receiving terminal may mean a destination terminal. When a resource allocation mode #2 (e.g., sidelink TM #2 or #4 defined in Table 2) is used, the terminal (e.g., transmitting terminal) may perform a resource selection operation.

For example, the terminal may determine candidate resource(s) by sensing resources within a sensing window, select transmission resource(s) within the candidate resource(s), and transmit data to another terminal using the selected resource(s). The terminal may consider assistance information received from another communication node (e.g., another terminal or base station) for determining the candidate resource(s) and/or selecting the transmission resource(s). The assistance information may be referred to as 'coordination information', 'inter-UE coordination information', or 'resource reservation information'. A method of transmitting/receiving assistance information and/or a sidelink communication method considering the assistance information may be performed as follows.

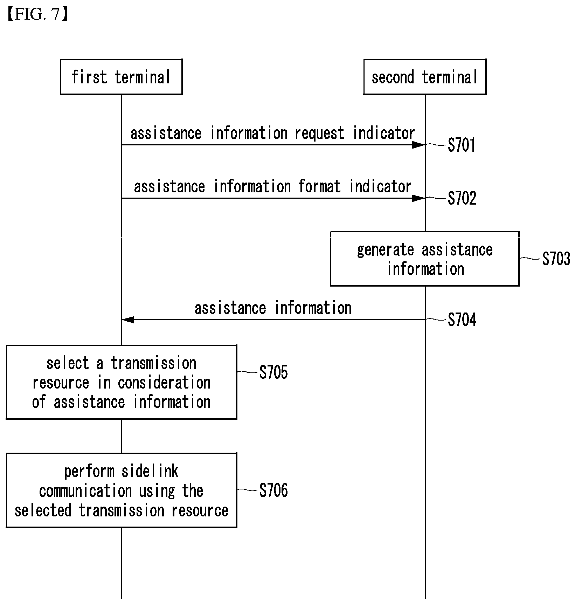

FIG. 7 is a sequence chart illustrating a first exemplary embodiment of a sidelink communication method considering assistance information.

Referring to FIG. 7, the communication system may include a first terminal and a second terminal. Each of the first terminal and the second terminal may be configured identically or similarly to the communication node 300 shown in FIG. 3. The first terminal and the second terminal may support the protocol stack(s) shown in FIGS. 4 to 6. The first terminal may operate as a transmitting terminal, a receiving terminal, and/or a coordination terminal, and the second terminal may operate as a transmitting terminal, a receiving terminal, and/or a coordination terminal.

For example, when the first terminal is a transmitting terminal, the second terminal may be a receiving terminal or a coordination terminal. When the first terminal is a receiving terminal, the second terminal may be a transmitting terminal or a coordination terminal. When the first terminal is a coordination terminal, the second terminal may be a transmitting terminal or a receiving terminal. The transmitting terminal may refer to a plurality of transmitting terminals belonging to a transmitting terminal group, and the receiving terminal may refer to a plurality of receiving terminals belonging to a receiving terminal group. The coordination terminal may be a terminal using the same resource pool (or the same bandwidth part (BWP)) as the transmitting terminal and/or the receiving terminal.

The first terminal may transmit an assistance information request indicator requesting transmission of assistance information to the second terminal through a PSCCH and/or a PSSCH (S701). The second terminal may receive the assistance information request indicator from the first terminal. For example, the assistance information request indicator may be included in first-stage SCI and/or second-stage SCI. The PSCCH may mean the first-stage SCI, and the PSSCH may mean the second-stage SCI and/or a sidelink-shared channel (SL-SCH). The SL-SCH may be allocated to a remaining region within the PSSCH except for a region to which the second-stage SCI is allocated. The assistance information request indicator may be referred to as 'first indicator'. The size of the assistance information request indicator may be 1 bit. The assistance information request indicator set to a first value (e.g., 0) may not request transmission of assistance information. The assistance information request indicator set to a second value (e.g., 1) may request transmission of assistance information. The assistance information may include one or more information elements defined in Table 3 below.

**[Table 3]**

| **Information elements** |
|---|
| Preferred resources (e.g., recommended resources) |
| Channel state information (CSI) of preferred resources (e.g., CSI of recommended resources) |
| Non-preferred resources (e.g., not-recommended resources) |
| Power control information |
| (minimum) source ID |
| (minimum) destination ID |
| DMRS pattern (e.g., DMRS pattern preferred by the receiving terminal) |
| MIMO enhancement information |
| Information of reserved resources (e.g., information on resource(s) reserved by SCI) |
| Information on resource(s) released among reserved resources |
| Information on not-used resource(s) among reserved resources |
| Transmission power information |
| Consecutive collision information |
| Discontinuous reception (DRX) parameters |
| Information not received from the transmitting terminal due to a half-duplex operation |

The preferred resources (e.g., recommended resources) may be preferred resources for sidelink communication. For example, the preferred resources may not be resources used or reserved for communication of another terminal. The non-preferred resources (e.g., not-recommended resources) may be non-preferred resources for sidelink communication. For example, the non-preferred resources may be resources used or reserved for communication of another terminal.

The assistance information may be classified into a plurality of assistance information formats. For example, the assistance information may be classified into an assistance information format 1 and an assistance information format 2. The assistance information format 1 may mean assistance information having a format 1, and the assistance information format 2 may mean assistance information having a format 2. The assistance information format 1 may include some of the information elements defined in Table 3. Information elements included in the assistance information format 2 may be more than information elements included in the assistance information format 1. For example, the assistance information format 2 may include all of the information elements defined in Table 3. A resource list and/or a resource map may be used to configure information elements included in each assistance information format. The size of the assistance information format 1 may be smaller than that of the assistance information format 2. A format type of the assistance information may be determined based on a payload size of the assistance information. The assistance information format 1 may be referred to as 'assistance information 1' or 'assistance information group 1'. The assistance information format 2 may be referred to as `assistance information 2' or 'assistance information group 2'.

The first terminal may transmit an assistance information format indicator to the second terminal through a PSCCH and/or a PSSCH (S702). The assistance information format indicator may be referred to as 'second indicator'. The second terminal may receive the assistance information format indicator from the first terminal. The assistance information format indicator may indicate an assistance information format (e.g., assistance information format 1 or 2) requested to be transmitted. The assistance information format indicator may be defined as shown in Table 4 below.

**[Table 4]**

| **Assistance information format indicator** | **Assistance information format** |
|---|---|
| First value (e.g., 0) | Assistance information format 1 |
| Second value (e.g., 1) | Assistance information format 2 |

The assistance information formats may have different sizes. The size of the assistance information format (e.g., assistance information) may be determined according to the value of the assistance information format indicator. The type of a channel through which the assistance information format is transmitted may vary depending on the size of the corresponding assistance information format. For example, when the size of the assistance information format is less than or equal to a threshold value, the corresponding assistance information format (e.g., assistance information) may be transmitted using an entire PSFCH resource or a part of a PSFCH resource. When the size of the assistance information format exceeds the threshold value, the corresponding assistance information format (e.g., assistance information) may be transmitted using an entire PSCCH resource or a part of a PSCCH resource, or using an entire PSSCH resource or a part of a PSSCH resource. In this case, the assistance information format indicator may indicate a channel through which the corresponding assistance information format is transmitted as well as the assistance information format. That is, the assistance information format indicator may be configured to be associated with the assistance information format and the channel through which the assistance information format is transmitted. For example, the assistance information format indicator having a size of 1 bit may be defined as shown in Table 5 below.

**[Table 5]**

| **Assistance information format indicator** | **Assistance information format** | **Transmission channel** |
|---|---|---|
| First value (e.g., 0) | Assistance information format 1 | PSFCH |
| Second value (e.g., 1) | Assistance information format 2 | PSCCH or PSSCH |

The assistance information format indicator having a size of 2 bits may be defined as shown in Table 6 below.

**[Table 6]**

| **Assistance information format indicator** | **Assistance information format** | **Transmission channel** |
|---|---|---|
| First value (e.g., 00) | Assistance information format 1 | PSFCH |
| Second value (e.g., 01) | Assistance information format 2 | PSFCH |
| Third value (e.g., 10) | Assistance information format 1 | PSCCH or PSSCH |
| Fourth value (e.g., 11) | Assistance information format 2 | PSCCH or PSSCH |

Alternatively, a second-stage SCI format field included in the first-stage SCI may be used to indicate the transmission channel of the assistance information format (e.g., assistance information). That is, the second-stage SCI format field may be configured to be associated with the second-stage SCI format and the transmission channel of the assistance information format. For example, the second-stage SCI format field may be defined as shown in Table 7 below.

**[Table 7]**

| **Second-stage SCI format field** | **Second-stage SCI format** | **Transmission channel of the assistance information format** |
|---|---|---|
| 00 | SCI format 2-A | PSFCH |
| 01 | SCI format 2-B | PSFCH |
| 10 | SCI format 2-A | PSSCH |
| 11 | SCI format 2-B | PSSCH |

The assistance information format (e.g., assistance information) may be transmitted through a PSFCH, PSCCH, or PSSCH when preconfigured condition(s) are satisfied. For example, if one or more conditions defined in Table 8 below are satisfied, the assistance information format may be transmitted through a PSFCH. The base station may inform the terminal(s) of one or more conditions defined in Table 8 below using at least one of system information, RRC message, MAC CE, or DCI. The one or more conditions defined in Table 8 below may be configured by a PC5 signaling procedure between terminals. The one or more conditions defined in Table 8 below may be configured in a resource pool-specific or service-specific manner.

**[Table 8]**

| | **Description** |
|---|---|
| Condition #1 | sl-PSFCH-Period=1 |
| Condition #2 | sl-PSFCH-Period=2 or 4, PSFCH overhead indicator=1 |
| Condition #3 | l_{d} is equal to or less than a threshold value |

If one or more conditions defined in Table 9 below are satisfied, the assistance information format may be transmitted through a PSCCH or PSSCH. The base station may inform the terminal(s) of the one or more conditions defined in Table 9 below using at least one of system information, RRC message, MAC CE, or DCI. The one or more conditions defined in Table 9 below may be configured by a PC5 signaling procedure between terminals. The one or more conditions defined in Table 9 below may be configured in a resource pool-specific or service-specific manner.

**[Table 9]**

| | **Description** |
|---|---|
| Condition #1 | sl-PSFCH-Period=0 |
| Condition #2 | l_{d} exceeds a threshold value |

The terminal(s) may identify the transmission channel of the assistance information (e.g., assistance information format) based on Table 8 and/or Table 9. sl-PSFCH-Period may indicate a periodicity of the PSFCH resource. `sl-PSFCH-Period = 0' may indicate that no PSFCH resource exists. `sl-PSFCH-Period = 1' may indicate that the periodicity of the PSFCH resource is 1 slot. `sl-PSFCH-Period = 2' may indicate that the periodicity of the PSFCH resource is 2 slots. `sl-PSFCH-Period = 4' may indicate that the periodicity of the PSFCH resource is 4 slots. The PSFCH overhead indicator may indicate whether to consider a PSFCH overhead in a slot. `PSFCH overhead indicator = 0' may indicate that the PSFCH overhead is not considered in the slot. `PSFCH overhead indicator = 1' may indicate that the PSFCH overhead is considered in the slot.

l_{d} may indicate a duration of scheduled resources for transmission of a PSSCH and a PSCCH associated therewith. For example, l_{d} may indicate a resource size of a PSSCH or a slot duration of a PSSCH. If l_{d} is less than or equal to a threshold value, the assistance information format may not be transmitted through a PSCCH or PSSCH. In this case, the assistance information format may be transmitted through a PSFCH. If l_{d} is greater than the threshold value, the assistance information format may be transmitted through a PSCCH or PSSCH.

Meanwhile, both the assistance information request indicator and the assistance information format indicator may be transmitted from the first terminal to the second terminal. In this case, the assistance information request indicator and the assistance information format indicator may be transmitted through the same message (e.g., first-stage SCI) or different messages. For example, the assistance information request indicator may be transmitted through first-stage SCI, and the assistance information format indicator may be transmitted through a PSSCH (e.g., second-stage SCI or SL-SCH).

Alternatively, without transmission of the assistance information format indicator, only the assistance information request indicator may be transmitted from the first terminal to the second terminal. When the assistance information defined in Table 3 is not classified into the plurality of assistance information formats (i.e., when the assistance information format is not configured), or when the base station preconfigures the assistance information format to the terminal(s) using system information, RRC messages, MAC CE, and/or control information (e.g., DCI), the assistance information format indicator may not be used.

Alternatively, without transmission of the assistance information request indicator, only the assistance information format indicator may be transmitted from the first terminal to the second terminal. In this case, the assistance information format indicator may indicate not only the assistance information format but also transmission of the corresponding assistance information format.

The above-described steps S701 and/or S702 may be performed when the assistance information transmission operation (e.g., use of assistance information) is enabled by the base station. For example, when the base station transmits information indicating that the assistance information transmission operation is enabled using at least one of system information, RRC message, MAC CE, or DCI, the terminals may perform the exemplary embodiment (e.g., S701 and/or S702) shown in FIG. 7. When the base station transmits information indicating that the assistance information transmission operation (e.g., use of assistance information) is disabled using at least one of system information, RRC message, MAC CE, or DCI, the terminals may not perform the exemplary embodiment shown in FIG. 7.

Meanwhile, the second terminal may receive the assistance information request indicator and/or the assistance information format indicator from the first terminal. When the assistance information request indicator is received, the second terminal may identify that transmission of the assistance information is requested. When the assistance information format indicator is received, the second terminal may identify the assistance information format requested to be transmitted by the first terminal. In addition, the second terminal may identify the channel (e.g., PSFCH, PSCCH, and/or PSSCH) through which the assistance information format is to be transmitted based on the assistance information format indicator, preconfigured condition(s) (e.g., condition(s) defined in Table 8 and/or Table 9), or second-stage SCI (e.g., second-stage SCI format field).

When the assistance information request indicator and/or the assistance information format indicator is received, the second terminal may generate assistance information (e.g., assistance information format) (S703). The assistance information may include one or more information elements defined in Table 3. In step S703, the second terminal may generate the assistance information format indicated by the assistance information format indicator. The second terminal may transmit the assistance information (e.g., assistance information format) to the first terminal (S704).

The assistance information may be transmitted through the channel (e.g., PSFCH, PSCCH, and/or PSSCH) determined based on the assistance information format indicator, preconfigured condition(s) (e.g., condition(s) defined in Table 8 and/or Table 9), or second-stage SCI (e.g., second-stage SCI format field). For example, first-stage SCI including the assistance information may be transmitted to the first terminal through a PSCCH. Second stage-SCI or an SL-SCH including the assistance information may be transmitted to the first terminal through a PSSCH. Alternatively, the channel and/or resource through which the assistance information (e.g., assistance information format) is transmitted may be preconfigured by the base station. In this case, the second terminal may transmit the assistance information to the first terminal using the channel and/or resource configured by the base station. The channel and/or resource used for transmission of the assistance information may be preconfigured through at least one of system information, RRC message, MAC CE, or control information.

The first terminal may perform a reception operation for the assistance information. For example, the first terminal may perform a monitoring operation of the assistance information in the channel (e.g., PSFCH, PSCCH, and/or PSSCH) determined based on the assistance information format indicator, preconfigured condition(s) (e.g., condition(s) defined in Table 8 and/or Table 9), or second-stage SCI (e.g., second-stage SCI format field). Alternatively, the first terminal may perform a monitoring operation of the assistance information in the channel and/or resource configured by the base station.

The first terminal may receive the assistance information from the second terminal, and may identify information element(s) included in the assistance information (e.g., information element(s) defined in Table 3). The first terminal may perform a resource selection operation in consideration of the assistance information (S705). For example, the first terminal may select a preferred resource (e.g., recommended resource) indicated by the assistance information as a candidate resource and/or a transmission resource. The first terminal may exclude a non-preferred resource (e.g., not-recommended resource) indicated by the assistance information from candidate resources, and may select a transmission resource from the candidate resources from which the non-preferred resource is excluded. The first terminal may perform sidelink communication using the selected transmission resource (S706).

The exemplary embodiments of the present disclosure may be implemented as program instructions executable by a variety of computers and recorded on a computer readable medium. The computer readable medium may include a program instruction, a data file, a data structure, or a combination thereof. The program instructions recorded on the computer readable medium may be designed and configured specifically for the present disclosure or can be publicly known and available to those who are skilled in the field of computer software.

Examples of the computer readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above exemplary hardware device can be configured to operate as at least one software module in order to perform the embodiments of the present disclosure, and vice versa.

While the exemplary embodiments of the present disclosure and their advantages have been described in detail, it should be understood that various changes, substitutions and alterations may be made herein without departing from the scope of the present disclosure.

## Claims

1. An operation method of a first terminal in a communication system, comprising:
transmitting a first indicator requesting transmission of assistance information to a second terminal;
receiving the assistance information from the second terminal;
selecting a transmission resource in consideration of resources indicated by the assistance information; and
performing sidelink communication using the transmission resource.

2. The operation method according to claim 1, further comprising: transmitting a second indicator indicating a format of the assistance information to the second terminal, wherein the assistance information received from the second terminal has the format indicated by the second indicator.

3. The operation method according to claim 2, wherein the second indicator indicates a format 1 or a format 2, a size of the format 1 is smaller than a size of the format 2, and a type of the format of the assistance information is determined based on a payload size of the assistance information.

4. The operation method according to claim 3, wherein when the second indicator indicates the format 1, the assistance information having the format 1 is received through a physical sidelink feedback channel (PSFCH), and when the second indicator indicates the format 2, the assistance information having the format 2 is received through a physical sidelink control channel (PSCCH) or a physical sidelink shared channel (PSSCH).

5. The operation method according to claim 2, wherein the second indicator further indicates a channel through which the assistance information having the format is transmitted, and the channel is a PSFCH, PSCCH, or PSSCH.

6. The operation method according to claim 2, wherein the first indicator is transmitted through a PSCCH, and the second indicator is transmitted through a PSCCH or PSSCH.

7. The operation method according to claim 1, wherein a channel through which the assistance information is transmitted is determined according to a PSFCH periodicity, the assistance information is transmitted through a PSCCH or PSSCH when the PSFCH periodicity is 0, and the assistance information is transmitted through a PSFCH when the PSFCH periodicity is not 0.

8. The operation method according to claim 1, wherein a channel through which the assistance information is transmitted is determined based on a resource size of a PSSCH, the assistance information is not transmitted through a PSSCH when the resource size is less than or equal to a threshold value, and the assistance information is transmitted through a PSSCH when the resource size exceeds the threshold value.

9. The operation method according to claim 1, wherein the resources indicated by the assistance information are preferred resources or non-preferred resources for the sidelink communication.

10. The operation method according to claim 1, wherein the transmitting of the first indicator is performed when use of the assistance information is enabled by a base station.

11. An operation method of a second terminal in a communication system, comprising:
receiving a first indicator requesting transmission of assistance information from a first terminal;
generating the assistance information indicating at least one of preferred resources and non-preferred resources according to the requesting of the first terminal; and
transmitting the assistance information to the first terminal,
wherein a transmission resource for sidelink communication is selected by the first terminal in consideration of the assistance information.

12. The operation method according to claim 11, further comprising: receiving a second indicator indicating a format of the assistance information from the first terminal, wherein the assistance information generated by the second terminal has the format indicated by the second indicator.

13. The operation method according to claim 12, wherein the second indicator indicates a format 1 or a format 2, a size of the format 1 is smaller than a size of the format 2, and a type of the format of the assistance information is determined based on a payload size of the assistance information.

14. The operation method according to claim 13, wherein when the second indicator indicates the format 1, the assistance information having the format 1 is received through a physical sidelink feedback channel (PSFCH), and when the second indicator indicates the format 2, the assistance information having the format 2 is received through a physical sidelink control channel (PSCCH) or a physical sidelink shared channel (PSSCH).

15. The operation method according to claim 12, wherein the second indicator further indicates a channel through which the assistance information having the format is transmitted, and the channel is a PSFCH, PSCCH, or PSSCH.

16. The operation method according to claim 12, wherein the first indicator is received through a PSCCH, and the second indicator is received through a PSCCH or PSSCH.

17. The operation method according to claim 11, wherein a channel through which the assistance information is transmitted is determined according to a PSFCH periodicity, the assistance information is transmitted through a PSCCH or PSSCH when the PSFCH periodicity is 0, and the assistance information is transmitted through a PSFCH when the PSFCH periodicity is not 0.

18. The operation method according to claim 11, wherein a channel through which the assistance information is transmitted is determined based on a resource size of a PSSCH, the assistance information is not transmitted through a PSSCH when the resource size is less than or equal to a threshold value, and the assistance information is transmitted through a PSSCH when the resource size exceeds the threshold value.

19. The operation method according to claim 11, wherein the receiving of the first indicator is performed when use of the assistance information is enabled by a base station.

20. The operation method according to claim 11, wherein the assistance information is transmitted through a resource configured by a base station.
